(19) **Europäisches Patentamt**
**European Patent Office**
**Office européen des brevets**

(11) **EP 1 706 653 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: **05797225.9**

(22) Anmeldetag: **18.10.2005**

(51) Int Cl.:
***F16B 13/14*** *(2006.01)*

(86) Internationale Anmeldenummer:
**PCT/EP2005/011160**

(87) Internationale Veröffentlichungsnummer:
**WO 2006/048110 (11.05.2006 Gazette 2005/19)**

(54) **VERANKERUNGSANORDNUNGEN UND VERWENDUNG EINER ANKERSTANGE**

ANCHORING ARRANGEMENT AND USE OF AN ANCHOR ROD

ELEMENT D'ANCRAGE ET UTILISATION D'UN BOULON D'ANCRAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.10.2004 DE 102004052570**

(43) Veröffentlichungstag der Anmeldung:
**04.10.2006 Patentblatt 2006/40**

(73) Patentinhaber: **fischerwerke Artur Fischer GmbH & Co. KG**
**72178 Waldachtal (DE)**

(72) Erfinder:
• **GRÜN, Jürgen**
**79268 Bötzingen (DE)**

• **VOGEL, Martin**
**79286 Glottertal (DE)**
• **SCHÄTZLE, Joachim**
**79341 Kenzingen (DE)**
• **PFAFF, Reinhold**
**79211 Denzlingen (DE)**

(74) Vertreter: **Suchy, Ulrich Johannes**
**fischerwerke**
**Artur Fischer GmbH & Co. KG**
**Weinhalde 14-18**
**72178 Waldachtal (DE)**

(56) Entgegenhaltungen:
**EP-A- 0 686 778        DE-A1- 19 712 425**
**DE-A1- 19 900 676        DE-C1- 4 121 832**
**DE-U1- 20 218 372**

EP 1 706 653 B1

**Beschreibung**

Die Erfindung betrifft eine Verankerungsanordnung mit den Merkmalen des Oberbegriffs des Anspruchs 1 sowie die Verwendung einer Ankerstange mit den Merkmalen des Oberbegriffs des Anspruchs 7.

Verankerungsanordnungen, bei denen eine Ankerstange mit Mörtel in einem Bohrloch in einem Ankergrund verankert ist, sind bekannt. Der Ankergrund ist beispielsweise ein Mauerwerk oder ein betoniertes Bauwerksteil oder Bauwerk. Der Begriff "Bohrloch" soll allgemein als Loch im Ankergrund unabhängig von der Art seiner Herstellung verstanden werden. Als Mörtel werden vielfach Ein- oder Mehrkomponenten-Kunstharzmörtel verwendet. Hier sollen unter dem Begriff Mörtel allgemein aushärtbare Massen verstanden werden. An der im Ankergrund verankerten Ankerstange lässt sich ein Gegenstand befestigen. Für eine risstaugliche Verankerung sind spezielle Ankerstangen erforderlich. Mit risstauglich ist die Tauglichkeit in Bezug auf eine mögliche Bohrlocherweiterung durch Rissbildung im Ankergrund gemeint. Risse können sich insbesondere in einer Zugzone des Ankergrunds bilden, also an einer Unterseite einer Decke, einer Brücke oder eines Trägers. Für diesen Verwendungszweck sind Ankerstangen bekannt, die eine Anzahl axial hintereinander angeordneter Kegelstümpfe in einem Verankerungsabschnitt aufweisen. Der Verankerungsabschnitt der Ankerstange ist der im Bohrloch befindliche Abschnitt der Ankerstange, der von Mörtel umschlossen ist. Die Kegelstümpfe sind vorzugsweise einstückig miteinander und einstückiger Bestandteil der Ankerstange. Bei einer Zugbeanspruchung der Ankerstange und einer Bohrlocherweiterung bewegt sich die Ankerstange ein kurzes Stück axial aus dem Bohrloch heraus und verschiebt dabei die Kegelstümpfe, die als Spreizkörper wirken und den sie umgebenden Mörtel nach außen drücken. Der Mörtel wird aufgeweitet bzw. aufgespreizt, so dass die Ankerstange im Ankergrund verankert bleibt. Eine Verankerungseinrichtung gilt hier als risstauglich, wenn die erreichbare Versagenslast im gerissenen Ankergrund (0,5 mm Riss) mindestens 80% der Last erreicht, bei welcher die Verankerungsanordnung im ungerissenen Ankergrund versagt, wobei Prüfrichtlinien teilweise das 80%-Kriterium nur in Bezug auf einen Vergleich zwischen dem Versagen bei einem 0,5 mm Riss und einem 0,3 mm Riss fordern.

Der Erfindung liegt die Aufgabe zugrunde, eine risstaugliche Verankerungsanordnung mit Mörtel vorzuschlagen, die keine Spezialankerstange erfordert.

Diese Aufgabe wird erfindungsgemäß durch die Merkmale des Anspruchs 1 und des Anspruchs 8 gelöst. Die erfindungsgemäße Verankerungsanordnung erfüllt die beiden Bedingungen:

$$\frac{\text{Bohrlochdurchmesser}}{\text{Ankerstangendurchmesser}} * \text{Verbundspannung} \geq 14 \frac{\text{N}}{\text{mm}^2} \quad \text{(I)}$$

und

$$0,4 \leq \frac{\text{Ankerstangendurchmesser}}{\text{Bohrlochdurchmesser}} \leq 0,85 \quad \text{(II)}$$

Üblicherweise wird das Bohrloch für eine Verankerung mit Mörtel mit einem um 2 Millimeter größeren Durchmesser als dem Ankerstangendurchmesser gebohrt. Der obere Grenzwert 0,85 vorstehender Bedingung (11) ergibt bei einem Ankerstangendurchmesser von beispielsweise 12 Millimeter ein um etwa 2 Millimeter im Durchmesser größeres Bohrloch. Die erfindungsgemäße Lehre geht also dahin, das Bohrloch mit größerem Durchmesser als bisher üblich zu bohren (der obere Grenzwert vorstehender Bedingung (II) ergibt den kleinsten Bohrlochdurchmesser des in der Bedingung (II) angegebenen Bereichs), d.h. einen größeren Zwischenraum zwischen der Ankerstange und einer Bohrlochwand zu schaffen. Während man eigentlich annehmen würde, dass ein möglichst enger Spalt, d.h. ein möglichst kleiner Zwischenraum zwischen der Ankerstange und der Bohrlochwand, bessere Verankerungswerte ergeben müsste, weil der Mörtel als schwächstes Element der Verankerungsanordnung einen nur kleinen Zwischenraum überbrücken muss, hat sich überraschenderweise gezeigt, dass jedenfalls für eine Risstauglichkeit ein größerer Zwischenraum zwischen Ankerstange und Bohrlochwand, d.h. ein größerer Bohrlochdurchmesser bei gegebenem Ankerstangendurchmesser, günstiger ist, d.h. eine größere Versagenskraft bewirkt.

Allerdings genügt es nicht, einfach nur den Bohrlochdurchmesser zu vergrößern, auch die Festigkeit des Mörtels hat Bedeutung für die Verankerung. Die Festigkeit des Mörtels ist in vorstehender Bedingung (I) mit der Verbundspannung berücksichtigt. Die Verbundspannung (in N/mm$^2$) ist die im Versagensfall von der Ankerstange auf den Mörtel ausgeübte Kraft pro Fläche, bei der der Mörtel unter den gegebenen Bedingungen (insbesondere Ankerstangendurchmesser/ Bohrlochdurchmesser) reißt. Sie wird im ungerissenen Ankergrund gemessen. Die Verbundspannung ist keine ausschließlich vom jeweiligen Mörtel abhängige Materialkonstante, sondern sie ist auch vom Bohrlochdurchmesser und von der Verankerungstiefe abhängig. Sie berechnet sich nach der Formel

$$\text{Verbundspannung} = \frac{\text{Bruchlast}}{\text{Bohrlochdurchmesser} * \pi * \text{Verankerungstiefe}} \left[\frac{N}{mm^2}\right]$$

Der Term im Nenner entspricht daher der sog. Verbundfläche. Es hat sich gezeigt, dass die Verankerungsanordnung bei Einhaltung der genannten Bedingungen risstauglich ist. Kriterium für die Risstauglichkeit ist dabei, dass die Ankerstange in gerissenem Ankergrund mindestens 80% der Last aufnehmen kann, die sie in ungerissenem Ankergrund aufnehmen kann, bevor die Verankerungsanordnung, üblicherweise durch Reißen des Mörtels, versagt. Ankergrund ist dabei regelmäßig Beton, der in gerissenem Fall einen 0,5 Millimeter breiten, das Bohrloch durchsetzenden Riss aufweist. Das Bohrloch ist also um 0,5 Millimeter senkrecht zu einer Längsmittelebene erweitert.

Die erfindungsgemäße Verankerungsanordnung hat den Vorteil, dass sie keine Spezialankerstange für eine risstaugliche Verankerung erfordert.

Vorzugsweise ist der Wert der Bedingung (I) höher und liegt bei etwa 17 bis 20 anstatt mindestens 14. Ebenfalls ist der Bereich der obigen Bedingung (II) eingeschränkt, in dem als oberer Grenzwert etwa 0,7 anstatt 0,85 gewählt wird. Es sei noch einmal erinnert, dass ein kleinerer oberer Grenzwert für die Bedingung (II) zu einem größeren Bohrlochdurchmesser bei gegebenem Ankerstangendurchmesser führt. Der Mindestzwischenraum zwischen der Ankerstange und der Bohrlochwand wird durch die angegebene Bereichsverkleinerung vergrößert.

Die Verbundspannung ist bei einer bevorzugten Ausgestaltung der Erfindung mindestens 6 N/mm$^2$, vorzugsweise 10 N/mm$^2$, unabhängig von der Bedingung (I), die vorzugsweise ebenfalls einzuhalten ist. Die hohe Verbundspannung ist insofern entscheidend, als durch die Verwendung einfacher Ankerstangen unabhängig von der Einhaltung der Bedingungen (I) und (II) bereits deutlich bessere Haltewerte im gerissenen Ankergrund erzielt werden, als dies aus dem Stand der Technik zu erwarten wäre (vgl. Eligehausen, Mallée: "Befestigungstechnik im Beton- und Mauerwerkbau", Verlag Ernst & Sohn, 2000, insbes. S. 182 - 185). So zeigte sich in Versuchen bei hohen Verbundspannungen, insbesondere über 10 N/mm$^2$, unabhängig vom Bohrlochdurchmesser ein unerwartet geringer Leistungsabfall im gerissenen Beton gegenüber dem ungerissenen Beton. Dabei sind mit einfachen Ankerstangen solche Ankerstangen gemeint, die mit einfachen Fertigungsverfahren, insbesondere umformtechnisch herstellbar sind. Sie weisen im Gegensatz zu den mit Konen versehenen Spezialankerstangen meist einen deutlich geringeren Umformgrad auf, mit einem Verhältnis von kleinstem zu größten Außendurchmesser im Verankerungsbereich von 0,8 bis 1, insbesondere von 0,85 bis 0,95. Mit dem Verankerungsbereich ist dabei der Teil der Ankerstange gemeint, in dem im Wesentlichen die Kräfte von der Ankerstange auf den ausgehärteten Mörtel übertragen werden. Unabhängig von den Bedingungen (I) und (II) können also überraschend bereits beispielsweise mit Normgewindestangen sehr gute Haltewerte im gerissenen Ankergrund erzielt werden, was bisher als unmöglich galt. Durch Einhaltung der Bedingungen (I) und (II) kann dieses Verhalten weiter verbessert werden.

Als Ankerstange ist an sich jede beliebige Ankerstange verwendbar, sie sollte vorzugsweise nicht glattwandig sondern profiliert sein. Eine erfindungsgemäße Ankerstange ist beispielsweise ein Bewehrungs- oder Armierungsstab, z.B. ein sog. Dywidag- (gerippter) Stab. Auch eine Gewindestange ist eine als Ankerstange für die erfindungsgemäße Verankerungsanordnung geeignete, profilierte Stange.

Zum Zentrieren der Ankerstange im Bohrloch bis zum Aushärten des Mörtels sieht eine Ausgestaltung der Erfindung ein Zentrierelement vor. Hierbei kann es sich beispielsweise um ein Kunststoffteil mit elastischen Rippen handeln, die die Ankerstange im Bohrloch zentrieren. Auch eine Kunststoffbuchse kann auf die Ankerstange aufgesetzt sein, die die Ankerstange in der Bohrlochmündung zentriert. Das Zentrierelement kann auf der Ankerstange vormontiert sein und eine Setztiefenmarkierung oder einen Setztiefenanschlag bilden. Das Zentrierelement stellt einen über den Umfang gleichbleibenden Abstand zwischen der Ankerstange und der Bohrlochwand sicher und bewirkt dadurch eine gleichmäßige Belastung des Mörtels, die Voraussetzung für eine hohe Verankerungskraft ist.

Eine Ausgestaltung der Erfindung sieht eine Schneide an einem vorderen Ende der Ankerstange vor. Diese kann auf die Ankerstange aufgesetzt oder aufgeschraubt sein. Die Schneide ist vorgesehen, wenn eine Mörtelpatrone in das Bohrloch eingebracht wird, die durch Einbringen der Ankerstange in das Bohrloch zerstört wird. Die Keilspitze erleichtert das Zerstören der Mörtelpatrone, bewirkt eine Verteilung des Mörtels im Bohrloch und verbessert eine Durchmischung der Mörtelkomponenten. Der Begriff "Schneide" ist eher funktionell als geometrisch zu verstehen.

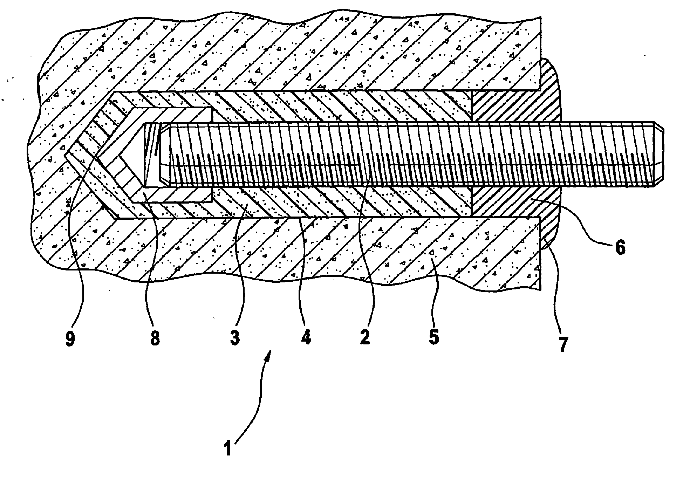

Die Erfindung wird nachfolgend an Hand eines in den Zeichnungen dargestellten Ausführungsbeispiels näher erläutert. Die einzige Figur zeigt einen Achsschnitt einer erfindungsgemäßen Verankerungsanordnung.

Die in der Zeichnung dargestellte, erfindungsgemäße Verankerungsanordnung 1 weist eine Ankerstange 2 auf, die mit Mörtel 3 in einem Bohrloch 4 in einem Ankergrund 5 verankert ist. Als Ankerstange 2 ist eine Gewindestange verwendet. Der Ankergrund 5 besteht beispielsweise aus Beton. Der Mörtel 3 ist vorzugsweise ein Zweikomponenten-Kunstharzmörtel, es sind allerdings auch andere Kunstharz- oder sonstige Mörtel verwendbar, die die Erfindungsbedingungen erfüllen, insbesondere eine ausreichend hohe Verbundspannung aufweisen.

Auf die Ankerstange 2 ist eine Kunststoffbuchse 6 aufgesetzt, die zweierlei Funktionen hat: beim Einbringen der Ankerstange 2 in das Bohrloch 4 wird die auf die Ankerstange 2 aufgesetzte Kunststoffbuchse 6 in eine Mündung des Bohrlochs 4 gedrückt und hält die Ankerstange 2 zentrisch im Bohrloch 4. Die Kunststoffbuchse 6 bildet damit ein Zentrierelement für die Ankerstange 2. Außerdem bildet die Kunststoffbuchse 6 eine Sitztiefenmarkierung. Sie ist an vorgegebener Stelle auf die Ankerstange 2 aufgesetzt und sitzt mit einem Flansch 7 an der Mündung des Bohrlochs 4 auf dem Ankergrund 5 auf und begrenzt dadurch eine Setztiefe der Ankerstange 2. Die Kunststoffbuchse 6 kann eine nicht dargestellte Austrittsöffnung für überschüssigen Mörtel 3 aufweisen.

Auf ein vorderes, im Bohrloch 4 befindliches Ende der Ankerstange 2 ist ein Schneidenelement 8 aufgesteckt oder aufgeschraubt. Das Schneiden element 8 weist eine quer oder schräg zum Bohrloch 4 verlaufende Schneide 9 oder auch eine Spitze auf. Die Schneide 9 kann prinzipiell auch am vorderen Ende der Ankerstange 2 ausgebildet sein. Sie dient der Zerstörung einer Mörtelpatrone und der Durchmischung und Verteilung der in der Mörtelpatrone enthaltenen Mörtelkomponenten im Bohrloch 4. Derartige, üblicherweise aus Glas bestehende und zwei oder mehr Mörtelkomponenten getrennt voneinander enthaltende Mörtelpatronen sind an sich bekannt und brauchen an dieser Stelle nicht erläutert zu werden. Der Mörtel 3 kann auch in anderer Weise in das Bohrloch 3 eingebracht, beispielsweise mit einer Auspresspistole injiziert werden. In diesem Fall ist das Schneidenelement 8 nicht erforderlich.

Erfindungsgemäß weist der Mörtel 3 eine Verbundspannung von mindestens 6 N/mm$^2$ auf, wobei die Verbundspannung die Bruchlast, also die auf die Ankerstange 2 ausgeübte Zugkraft, bei der der Mörtel 3 reißt, pro Verbundfläche ist. Weitere Bedingungen der erfindungsgemäßen Verankerungsanordnung 1 sind, dass der Bohrlochdurchmesser geteilt durch den Ankerstangendurchmesser multipliziert mit der Verbundspannung mindestens 14, vorzugsweise zwischen 17 und 20 beträgt. Das Verhältnis von Ankerstangendurchmesser zu Bohrlochdurchmesser beträgt mindestens 0,4 und maximal 0,85, vorzugsweise maximal 0,7. Versuche (siehe unten) haben gezeigt, dass die erfindungemäße Verankerungsanordnung 1 bei Einhalten der angegebenen Bedingungen risstauglich ist. Als risstauglich wird die Verankerungsanordnung 1 angesehen, wenn ihre Bruchlast im gerissenen Ankergrund 5 mindestens 80% der Bruchlast im ungerissenen Ankergrund 5 beträgt, wobei der Ankergrund 5 Beton ist. Der Riss ist ein Parallelriss, der das Bohrloch 4 in einer Axialebene durchsetzt und eine Rissbreite von 0,5 Millimeter aufweist. Das Bohrloch 4 wird quer zum Riss um die Rissbreite aufgeweitet.

Versuche mit einer Ankerstange 2 mit einem Durchmesser M12 bei einer Verankerungstiefe von 95 Millimeter und einem 0,5 Millimeter breiten Parallelriss haben die in folgender Tabelle aufgelisteten Werte ergeben:

Ankerstange: Gewindestange M12
Verankerungstiefe: 95 mm
Mörtel: fischer FIS EM 390 S
0,5 mm Parallelriss

| Bor-Ø | Bruchlast | Verbundspannung (Bohr-Ø) | Bohr-Ø/Asta-Ø x Verbundspannung | Asta-Ø / Bohr-Ø | Bemerkungen |
|---|---|---|---|---|---|
| 14 | 36,0 kN | 8,6 N/mm$^2$ | 10,1 N/mm$^2$ | 0,86 | nicht risstauglich |
| 16 | 64,0 kN | 13,4 N/mm$^2$ | 17,9 N/mm$^2$ | 0,75 | risstauglich |
| 18 | 71,0 kN | 13,2 N/mm$^2$ | 19,8 N/mm$^2$ | 0,67 | risstauglich |
| 20 | 66,0 kN | 11,1 N/mm$^2$ | 18,4 N/mm$^2$ | 0,60 | risstauglich |
| 22 | 71,5 kN | 10,9 N/mm$^2$ | 20,0 N/mm$^2$ | 0,55 | risstauglich |
| 18 | 48,0 kN | 8,9 N/mm$^2$ | 13,4 N/mm$^2$ | 0,67 | 2 x ausgeblasen nicht risstauglich |

Die Tabelle zeigt tendenziell, dass größere Bohrlochdurchmesser eine Risstauglichkeit gemäß obiger Kriterien bewirken. Auch die Reinigung des Bohrlochs hat entscheidenden Einfluss auf die Verankerung, wie die letzte Zeile der Tabelle zeigt. Hier ist das Bohrloch mit einem Handausbläser 2 x ausgeblasen worden. Bei den übrigen Versuchen ist das Bohrloch mit Druckluft und/oder durch Ausbürsten besser gereinigt und dadurch die Bruchlast erheblich erhöht worden.

**Patentansprüche**

1. Verankerungsanordnung mit einer Ankerstange (2), die mit einem Mörtel (3) in einem Bohrloch (4) in einem gerissenen Ankergrund (5) verankert ist, **dadurch gekennzeichnet, dass**

   die Ankerstange (2) als Verankerungsbereich ein Normgewinde, und/oder ein Rändel und/oder die Profilierung eines Bewehrungsstabes aufweist und/oder das Verhältnis von kleinsten zu größtem Außendurchmesser im Verankerungsbereich der Ankerstange (2) zwischen 0,8 und 1, insbesondere zwischen 0,85 und 0,95, liegt;

   und dass die Bedingungen erfüllt sind:

$$\frac{\text{Bohrlochdurchmesser}}{\text{Ankerstangendurchmesser}} * \text{Verbundspannung} \geq 14 \frac{N}{mm^2} \quad \text{I}$$

   und

$$0{,}4 \leq \frac{\text{Ankerstangendurchmesser}}{\text{Bohrlochdurchmesser}} \leq 0{,}7 \quad \text{II}$$

2. Verankerungsanordnung nach Anspruch 1, **dadurch gekennzeichnet, dass** die Bedingung erfüllt ist:

$$\frac{\text{Bohrlochdurchmesser}}{\text{Ankerstangendurchmesser}} * \text{Verbundspannung} = 17 - 20 \frac{N}{mm^2}$$

3. Verankerungsanordnung nach Anspruch 1, **dadurch gekennzeichnet, dass** die Verbundspannung $\geq 10$ N/mm$^2$ ist.

4. Verankerungsanordnung nach Anspruch 1, **dadurch gekennzeichnet, dass** die Ankerstange (2) eine profilierte Stange, insbesondere eine Gewindestange ist.

5. Verankerungsanordnung nach Anspruch 1, **dadurch gekennzeichnet, dass** die Verankerungsanordnung (1) ein Zentrierelement (6) aufweist, das die Ankerstange (2) im Bohrloch (4) zentriert.

6. Verankerungsanordnung nach Anspruch 1, **dadurch gekennzeichnet, dass** die Ankerstange (2) eine Schneide (9) aufweist.

7. Verwendung einer Ankerstange (2) in einem gerissenen Ankergrund (5) mit einem Mörtel (3), **dadurch gekennzeichnet, dass**

   die Ankerstange (2) als Verankerungsbereich ein Normgewinde, und/oder ein Rändel und/oder die Profilierung eines Bewehrungsstabes aufweist und/oder das Verhältnis von kleinsten zu größtem Außendurchmesser im Verankerungsbereich der Ankerstange (2) zwischen 0,8 und 1, insbesondere zwischen 0,85 und 0,95, liegt;

   und dass die Verbundspannung größer 5,6 N/mm$^2$, insbesondere größer 10 N/mm$^2$, ist.

**Claims**

1. Anchoring arrangement having an anchor rod (2) which is anchored with a mortar (3) in a bore (4) in a cracked anchoring substrate (5), **characterized in that**

   the anchor rod (2) has as anchoring region a standard thread, and/or knurling and/or the surface-shaping of a reinforcing bar, and/or the ratio of the smallest to the largest outer diameter in the anchoring region of the anchor rod (2) is from 0.8 to 1, especially from 0.85 to 0.95;

   and the following conditions are fulfilled:

$$\frac{\text{bore diameter}}{\text{diameter of anchor rod}} * \text{bond stress} \geq 14 \frac{N}{mm^2} \quad \text{I}$$

and

$$0.4 \leq \frac{\text{diameter of anchor rod}}{\text{bore diameter}} \leq 0.7 \quad \text{II.}$$

2.  Anchoring arrangement according to claim 1, **characterized in that** the following condition is fulfilled:

$$\frac{\text{bore diameter}}{\text{diameter of anchor rod}} * \text{bond stress} = 17 - 20 \frac{N}{mm^2} \quad .$$

3.  Anchoring arrangement according to claim 1, **characterized in that** the bond stress is $\geq 10$ N/mm$^2$.

4.  Anchoring arrangement according to claim 1, **characterized in that** the anchor rod (2) is a rod having surface-shaping, especially a threaded rod.

5.  Anchoring arrangement according to claim 1, **characterized in that** the anchoring arrangement (1) has a centring element (6) which centres the anchor rod (2) in the bore (4).

6.  Anchoring arrangement according to claim 1, **characterized in that** the anchor rod (2) has a cutter (9).

7.  Use of an anchor rod (2) in a cracked anchoring substrate (5) with a mortar (3), **characterized in that**
    the anchor rod (2) has as anchoring region a standard thread, and/or knurling and/or the surface-shaping of a reinforcing bar, and/or the ratio of the smallest to the largest outer diameter in the anchoring region of the anchor rod (2) is from 0.8 to 1, especially from 0.85 to 0.95;
    and the bond stress is greater than 5.6 N/mm$^2$, especially greater than 10 N/mm$^2$.

**Revendications**

1.  Dispositif d'ancrage comportant une tige d'ancrage (2) qui est ancrée par un mortier (3) dans trou foré (4) prévu dans une base d'ancrage fissurée (5), **caractérisé en ce que** la tige d'ancrage (2) présente en tant que partie ancrage un filetage normalisé et/ou un moletage et/ou le profilage d'une barre d'armature, et/ou **en ce que** le rapport entre le diamètre extérieur le plus petit et le diamètre extérieur le plus grand dans la partie ancrage de la tige d'ancrage (2) se situe entre 0,8 et 1, en particulier entre 0,85 et 0,95, et **en ce que** sont remplies les conditions suivantes :

$$\frac{\text{diamètre du trou foré}}{\text{diamètre de la tige d'ancrage}} * \text{contrainte d'adhérence} \geq 14 \frac{N}{mm^2} \quad \text{(I)}$$

et

$$0,4 \leq \frac{\text{diamètre de la tige d'ancrage}}{\text{diamètre du trou foré}} \leq 0,7 \quad \text{(II)}$$

2.  Dispositif d'ancrage selon la revendication 1, **caractérisé en ce qu'**est remplie la condition suivante :

$$\frac{\text{diamètre du trou foré}}{\text{diamètre de la tige d'ancrage}} * \text{contrainte d'adhérence} = 17 - 20 \frac{N}{mm^2}$$

**3.** Dispositif d'ancrage selon la revendication 1, **caractérisé en ce que** la contrainte d'adhérence est $\geq 10$ N/mm$^2$.

**4.** Dispositif d'ancrage selon la revendication 1, **caractérisé en ce que** la tige d'ancrage (2) est une tige profilée, en particulier une tige filetée.

**5.** Dispositif d'ancrage selon la revendication 1, **caractérisé en ce que** le dispositif d'ancrage (1) présente un élément de centrage (6) qui centre la tige d'ancrage (2) dans le trou foré (4).

**6.** Dispositif d'ancrage selon la revendication 1, **caractérisé en ce que** la tige d'ancrage (2) présente un tranchant (9).

**7.** Utilisation d'une tige d'ancrage (2) dans une base d'ancrage fissurée (5) en utilisant un mortier (3), **caractérisée en ce que** la tige d'ancrage (2) présente en tant que partie ancrage un filetage normalisé et/ou un moletage et/ou le profilage d'une barre d'armature, et/ou **en ce que** le rapport entre le diamètre extérieur le plus petit et le diamètre extérieur le plus grand dans la partie ancrage de la tige d'ancrage (2) se situe entre 0,8 et 1, en particulier entre 0,85 et 0,95, et **en ce que** la contrainte d'adhérence est supérieure à 5,6 N/mm$^2$, en particulier supérieure à 10 N/mm$^2$.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ELIGEHAUSEN ; MALLÉE.** Befestigungstechnik im Beton- und Mauerwerkbau. Verlag Ernst & Sohn, 2000, 182-185